# EUROPEAN PATENT APPLICATION

(11) **EP 4 292 926 A1**
(43) Date of publication of application: **20.12.2023**
(21) Application number: 22759218.5
(22) Date of filing: 27.01.2022
(51) Int. Cl.: B64C 13/18, B64C 17/02, B64D 11/00

(54) **ATTITUDE CONTROL DEVICE AND FLYING BODY**

(30) Priority: 26.02.2021 JP 2021029648
(71) Applicant: Quintuple Air, Inc., Tokyo 107-0052 (JP)
(72) Inventor: SATSUKAWA Seiji, Yokohama-shi, Kanagawa 221-0022 (JP); ARIKAWA Tomoaki, Yokohama-shi, Kanagawa 221-0022 (JP); HARADA Masako, Yokohama-shi, Kanagawa 221-0022 (JP)
(74) Representative: Schröer, Gernot H.
(86) International application number: PCT/JP2022/003055
(87) International publication number: WO 2022/181176

(57) **Abstract**

An attitude control device according to an embodiment includes a detection unit that detects an inclination of an aircraft, and a notification unit that performs a notifying process for passengers depending on the detected inclination. An aircraft according to an embodiment includes a detection unit that detects an inclination of an airframe, and a notification unit that performs a notifying process for passengers depending on the detected inclination of the airframe.

## Description

### Technical Field

The present invention relates to an attitude control device, and particularly to a technology for stabilizing the attitude of an aircraft (aerial vehicle) or the like.

### Background Art

There has recently been growing global interest in industrial use of so-called drones. As a result of development of multicopters capable of autonomous navigation, such multicopters are expected to be used in a wide variety of fields such as agriculture, surveys, and delivery, and practical uses thereof are rapidly being promoted. Demands for passenger transport services by applying the technologies relating to the multicopters to aircraft such as electric vertical take-off and landing aircraft (eVTOL aircraft) are also expected.

Note that an airframe of such an aircraft may be inclined owing to disturbance such as wind during flight. Even in such cases, it is necessary to ensure stable flight by quickly controlling the attitude of the airframe. Therefore, a technology for supporting attitude control by providing a mechanism for moving the payload such as batteries in an aircraft and changing the positions of the payload when an inclination of the airframe is detected, for example, has been proposed (refer to Patent Literature 1).

In addition, a technology for additionally providing, as a device to be used for flight tests, weights and a mechanism for moving the weights in an airframe, and changing the positions of the weights to change the gravity center of the airframe has been proposed (refer to Patent Literature 2). This allows reproduction of changes in the gravity center when passengers and payload are on board, and verification of the stability of attitude control in a flight test.

### Related Art List

Patent Literature 1: JP 2007-261414 A
Patent Literature 2: JP 2019-142441 A

### Summary

### Technical Problem

According to the technologies described in Patent Literatures 1 and 2, payload and a mechanism for moving the payload need to be provided in an aircraft, and a structure in which the moving mechanism is driven by motors is necessary. Thus, a corresponding power to cause the motors to operate is required. In view of the fact that battery power is limited, the influence of increased power consumption to the environment (emission of greenhouse gases), and the like, it is desired to enable attitude control of an airframe while achieving power saving as much as possible. In this regard, the present inventors have conceived of an idea of devising controls so that the cooperation of passengers can be spontaneously gained during attitude control of an aircraft, which can achieve the power saving described above at least in relation to passenger transport services.

The present invention has been achieved on the basis of recognition of the aforementioned problems, and a chief object thereof is to provide a technology capable of assisting attitude control of an airframe while reducing power consumption.

### Solution to problem

An aspect of the present invention is an attitude control device. The attitude control device includes: a detection unit that detects an inclination of an aircraft; and a notification unit that performs a notifying process for passengers depending on the detected inclination.

Another aspect of the present invention is an attitude control device. The attitude control device includes: main equipment for accommodating passengers; a display unit that displays a screen to be shown to the passengers; a detection unit that detects an inclination of the main equipment; and a display control unit that changes the screen on the display unit depending on the detected inclination.

A still another aspect of the present invention is an attitude control device. The attitude control device includes: an information obtaining unit that obtains cruising information of an aircraft; and a notification unit that performs a notifying process for passengers depending on the obtained cruising information.

A still another aspect of the present invention is an aircraft. The aircraft includes: a detection unit that detects an inclination of an airframe; and a notification unit that performs a notifying process for passengers depending on the detected inclination.

### Advantageous Effects of Invention

According to the present invention, a technology capable of assisting attitude control of an airframe while reducing power consumption can be provided.

### Brief Description of Drawings

FIG. 1 is a perspective view illustrating an external appearance of an aircraft according to an embodiment.
FIG. 2 is a plan view schematically illustrating a structure of the aircraft.
FIG. 3 is a block diagram schematically illustrating an electrical configuration of the aircraft.
FIG. 4 is a functional block diagram of an attitude control device.
FIGS. 5A and 5B are diagrams illustrating a state in which passengers are seated on seats.
FIGS. 6A and 6B are diagrams illustrating examples of screens to be displayed on a display device.
FIGS. 7A and 7B are diagrams illustrating an example of a movement that passengers are urged to make by notification.
FIG. 8 is a table illustrating an outline structure of a notification information selection table.
FIG. 9 is a flowchart illustrating attitude control processes performed by the attitude control device.
FIGS. 10A and 10B are diagrams illustrating a notification screen according to a first modification.
FIGS. 11A and 11B are diagrams illustrating a notification screen according to a second modification.
FIGS. 12A and 12B are diagrams illustrating a notification screen according to a third modification.
FIGS. 13A and 13B are diagrams illustrating arrangements of display devices according to modifications.
FIGS. 14A and 14B are diagrams illustrating arrangements of seats and display devices according to modifications.
FIGS. 15A and 15B are diagrams illustrating an attitude control method according to a modification.

### Description of Embodiments

An embodiment of the present invention will now be described in detail with reference to the drawings. In the following embodiment and modifications thereof, components that are substantially the same will be designated by the same reference numerals and redundant description thereof may be omitted as appropriate.

In this embodiment, a drone type eVTOL aircraft will be presented as an example of an aircraft (aerial vehicle). The aircraft is a manned aircraft including a plurality of seats for passengers therein, detects an inclination of the airframe in the process of attitude control during flight, and performs a notifying process for urging passengers to change their postures in response to the detected inclination. The attitude control of the aircraft is not performed by moving the payload but includes, as part of the control, leading the passengers' behaviors or suggesting requests to passengers. This results in lower power consumption and provides support to the attitude control. Details thereof will be described hereinafter.

An overall structure of the aircraft will first be described.

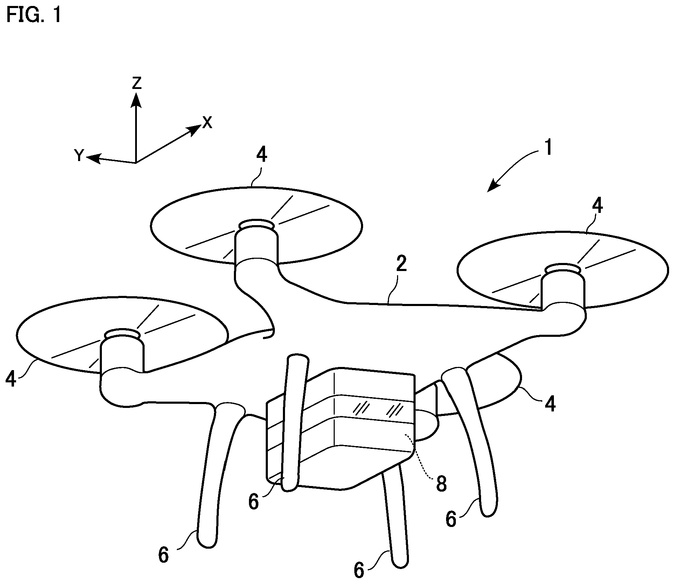

FIG. 1 is a perspective view illustrating an external appearance of the aircraft according to the embodiment.

In the description of the embodiment, an X direction, a Y direction, and a Z direction in the drawings correspond to the front-back direction, the left-right direction, and the up-down direction, respectively (the same is applicable hereinafter). The positive direction in the X direction corresponds to the cruising direction of the aircraft 1.

The aircraft 1 includes a fuselage 2 constituting a major part of its airframe, four rotors 4 that rotate above the fuselage 2, and four leg parts 6 extending downward from the fuselage 2. A cabin 8 is provided at the center inside the fuselage 2. Passengers to be transported get in the cabin 8. The four leg parts 6 are arranged at four positions around the cabin 8 and extend downward beyond the height of the cabin 8. The aircraft 1 is a manned aircraft but is an automatically operated aircraft (automatically controlled aircraft) with no cockpit.

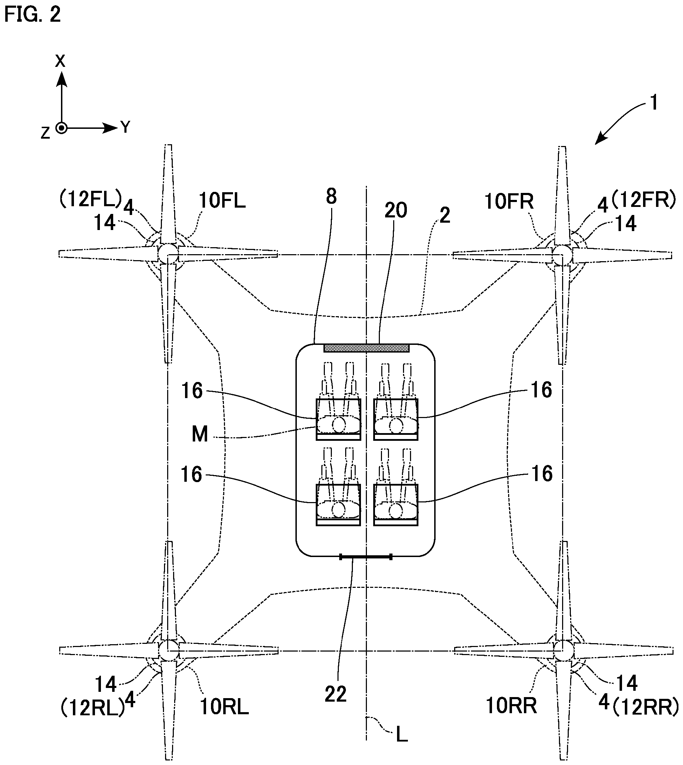

FIG. 2 is a plan view schematically illustrating a structure of the aircraft 1.

The fuselage 2 has a square shape in planar view, and includes the cabin 8 having a rectangular shape in planar view at the center. Four arms 10FL, 10FR, 10RL, and 10RR extending radially in four directions from the fuselage 2 are provided. These arms will be collectively referred to as the "arms 10" when the arms are not particularly distinguished from each other.

Rotor units 12FL, 12FR, 12RL, and 12RR are supported by end portions of the arms 10FL, 10FR, 10RL, and 10RR, respectively. These rotor units will be collectively referred to as "rotor units 12" when the rotor units are not particularly distinguished from each other. The rotor units 12 each include a rotor 4 and a motor 14 that drives rotation of the rotor unit 12. The rotating speeds of the rotors 4 are individually controlled, so that the attitudes, that is, the pitch, roll, and yaw attitudes of the aircraft 1 during cruising can be adjusted.

The four rotors 4 are located at four vertices of a substantially square shape in planar view. The cabin 8 is located at the center in the square area. Thus, the center of gravity of the aircraft 1 is substantially at the center of the square, which allows the aircraft 1 to easily maintain balance during flight.

In the cabin 8, a plurality of seats 16 are arranged so that up to four passengers M can be on board. In the embodiment, all the seats 16 are arranged to face forward and in two rows and two columns. Needless to say, "the direction to which a seat faces" is the direction to which the seat front faces. The inside of the cabin 8 has a symmetric structure with respect to a center line L in planar view. Two seats in a row are at symmetric positions with respect to the center line L.

A display device 20 having a relatively large screen that can be viewed by all the passengers M is installed on a front wall surface in the cabin 8. The display device 20 functions as a "display area" that can be viewed by the passengers M, and may be a liquid crystal display or an organic EL display, for example. In addition, a door 22 is provided in a wall at the back of the cabin 8. Passengers can get into the cabin 8 one by one through the door 22 in an open state.

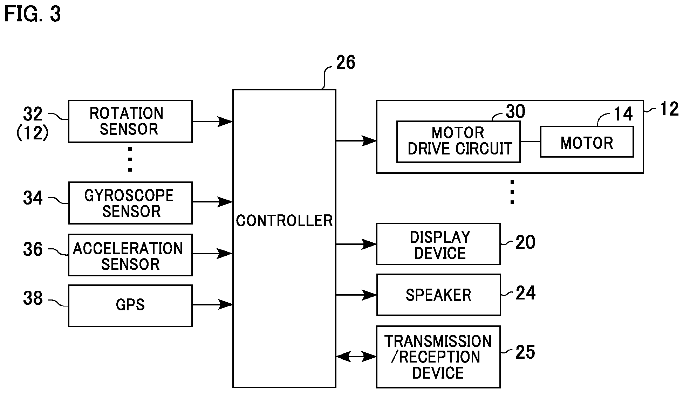

FIG. 3 is a block diagram schematically illustrating an electrical configuration of the aircraft 1.

A control system of the aircraft 1 includes a controller 26 as a main component. The controller 26 is a microcomputer that includes computing units such as a CPU and various coprocessors.

The controller 26 is connected with the rotor units 12 via communication lines, which are not illustrated, and controls driving of the rotor units 12. Each of the rotor units 12 includes, in addition to the motor 14 described above, a motor drive circuit 30 that drives the motor 14, a rotation sensor 32 for detecting the rotation state of the motor 14, and the like. Note that the rotor units 12 each include a battery, which is not illustrated, for power supply to the motor drive circuit 30 and the rotation sensor 32.

The controller 26 outputs control signals to the individual motor drive circuits 30 in accordance with control programs to control the rotations of the individual motors 14. The rotating speeds of the individual motors 14 are adjusted to control the cruising speed of the aircraft 1 and perform pitch control, yaw control, and roll control thereof. The rotation sensors 32 output signals indicting the rotating speeds of the motors 14. The controller 26 receives the signals and determines whether or not the rotating speeds of the individual rotors 4 have reached control target values.

The controller 26 further have mounted thereon various sensors such as a gyroscope sensor 34 and an acceleration sensor 36 in addition to the rotation sensor 32 described above, a GPS receiver 38, and the like, and detection signals and received signals from the sensors and the receiver are input to the controller 26. The controller 26 can determine the attitude of the airframe on the basis of detection signals from the gyroscope sensor 34 and the acceleration sensor 36. The controller 26 can also determine a current navigation position on the basis of signals received by the GPS receiver 38.

The controller 26 is also connected with the display device 20 described above, a speaker 24, and a transmission/reception device 25. The speaker 24 outputs audio such as announcement and music. The transmission/reception device 25 transmits and receives data to and from other aircraft and external devices. The controller 26 can also predict the influence on the airframe on the basis of route information such as meteorological information transmitted from an external device, for example, and perform processing to reduce the influence.

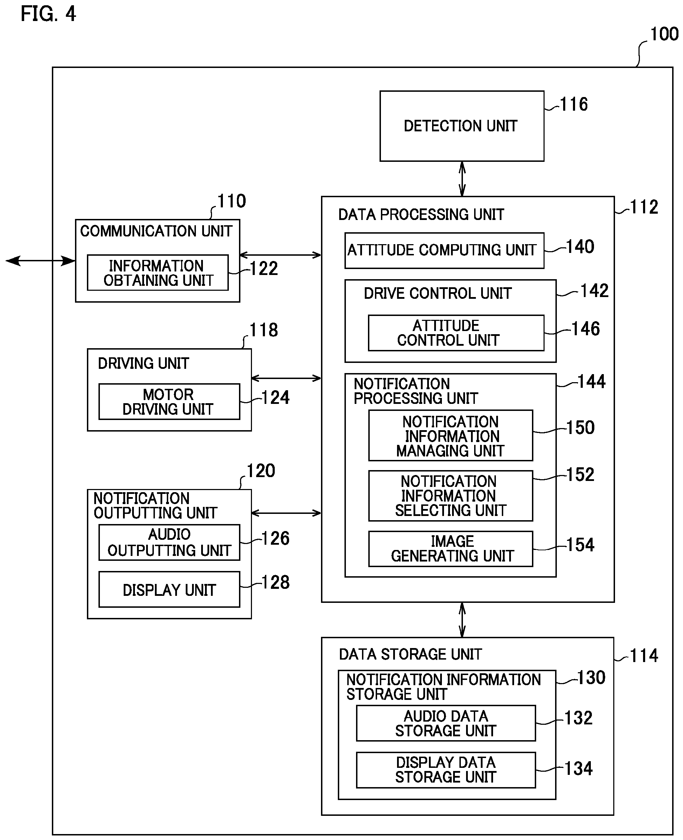

FIG. 4 is a functional block diagram of an attitude control device.

The attitude control device 100 is mounted on the aircraft 1, and controls the attitude of the airframe during takeoff and landing (including vertical takeoff and landing) and during cruising. The components of the attitude control device 100 are implemented by hardware including the controller 26 (microcomputer) described above, storage devices such as memories and storages, and wired and wireless communication lines that connect these devices, and software that is stored in the storage devices and supplies processing instructions to the computing units. Computer programs may be constituted by device drivers and application programs, and a library that provides common functions to these programs. Blocks to be described below do not refer to configurations in units of hardware but to blocks in units of functions.

The attitude control device 100 includes a communication unit 110, a data processing unit 112, a data storage unit 114, a detection unit 116, a driving unit 118, and a notification outputting unit 120. The communication unit 110 performs communication with external terminals. The communication unit 110 includes an information obtaining unit 122. The information obtaining unit 122 obtains information about the route from an external device of a preceding aircraft, a base station, or the like.

The data storage unit 114 stores various programs and data. The data storage unit 114 includes a notification information storage unit 130. The notification information storage unit 130 stores notification information for directly or indirectly urging passengers to make predetermined movements depending on the inclination of the airframe. The notification information storage unit 130 includes an audio data storage unit 132 and a display data storage unit 134.

The audio data storage unit 132 stores data (audio data) of audio to be output from the speaker 24 for notification to passengers. The display data storage unit 134 stores data (display data) such as images to be displayed on the display device 20 for notification to passengers. The display data includes image data and text data. The image data may include, in addition to static images and videos generated in advance, two-dimensional or three-dimensional model data on the basis of which displayed images (presentation images) are changed.

The detection unit 116 obtains sensor information from the gyroscope sensor 34, the acceleration sensor 36, and the like. The driving unit 118 drives actuators relating to control of the aircraft 1. The driving unit 118 includes a motor driving unit 124. The motor driving unit 124 drives the motor drive circuits 30. The notification outputting unit 120 includes an audio outputting unit 126 and a display unit 128. The audio outputting unit 126 outputs audio from the speaker 24 for notification to passengers. The display unit 128 displays a notification screen on the display device 20 for notification to passengers.

The data processing unit 112 performs various processes on the basis of data obtained by the communication unit 110, information detected by the detection unit 116, and data stored in the data storage unit 114. The data processing unit 112 also functions as an interface of the communication unit 110, the detection unit 116, the driving unit 118, the notification outputting unit 120, and the data storage unit 114.

The data processing unit 112 includes an attitude computing unit 140, a drive control unit 142, and a notification processing unit 144. The attitude computing unit 140 computes the current attitude of the airframe on the basis of inclination information detected by the detection unit 116. The drive control unit 142 drives various actuators for controlling the attitude of the aircraft 1. The drive control unit 142 includes an attitude control unit 146. The attitude control unit 146 outputs control commands to the motor driving unit 124 to individually drive the motor drive circuits 30. The rotating speeds of the four rotors 4 are controlled in this manner, so that the attitude of the airframe is properly adjusted.

The notification processing unit 144 includes a notification information managing unit 150, a notification information selecting unit 152, and an image generating unit 154. The notification information managing unit 150 manages the notification information (audio data, display data) stored in the notification information storage unit 130 in association with notification IDs. The notification information selecting unit 152 identifies a notification ID on the basis of the inclination of the airframe and selects one of a plurality of pieces of notification information.

The notification information selecting unit 152 holds a notification information selection table (to be described later) in which airframe inclination information and notification IDs are associated with each other in advance. Each notification ID is further associated with audio data and display data to be output as notification information. The notification information selecting unit 152 refers to the notification information selection table to identify a notification ID associated with the attitude information of the airframe, and selects the notification information associated with the notification ID. The image generating unit 154 generates a video based on the model data.

The notification processing unit 144 causes the notification outputting unit 120 to output the selected notification information. In the embodiment, the notification processing unit 144 and the notification outputting unit 120 functions as a "notification unit" that performs a notifying process depending on the inclination of the aircraft. The notification processing unit 144 also functions as a "display control unit".

Next, details of an attitude control method according to the embodiment will be explained.

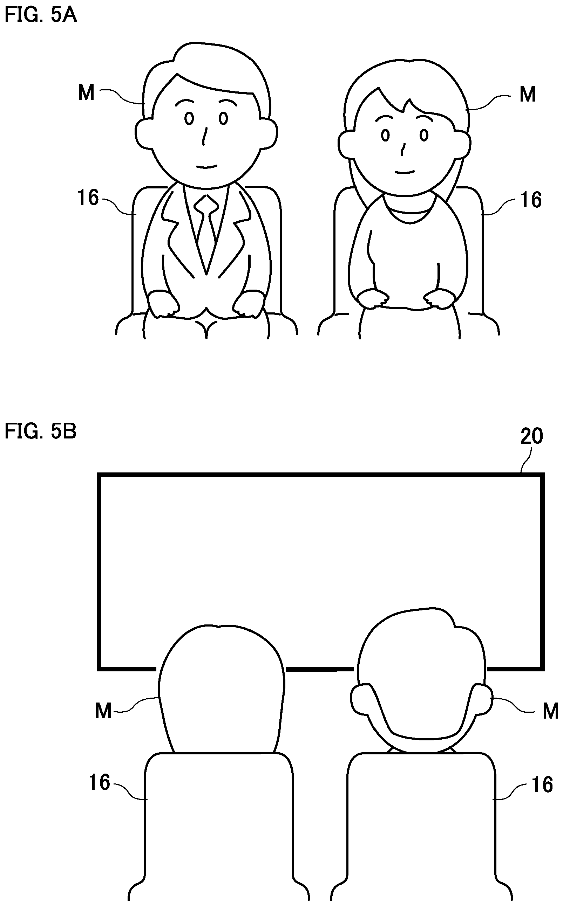

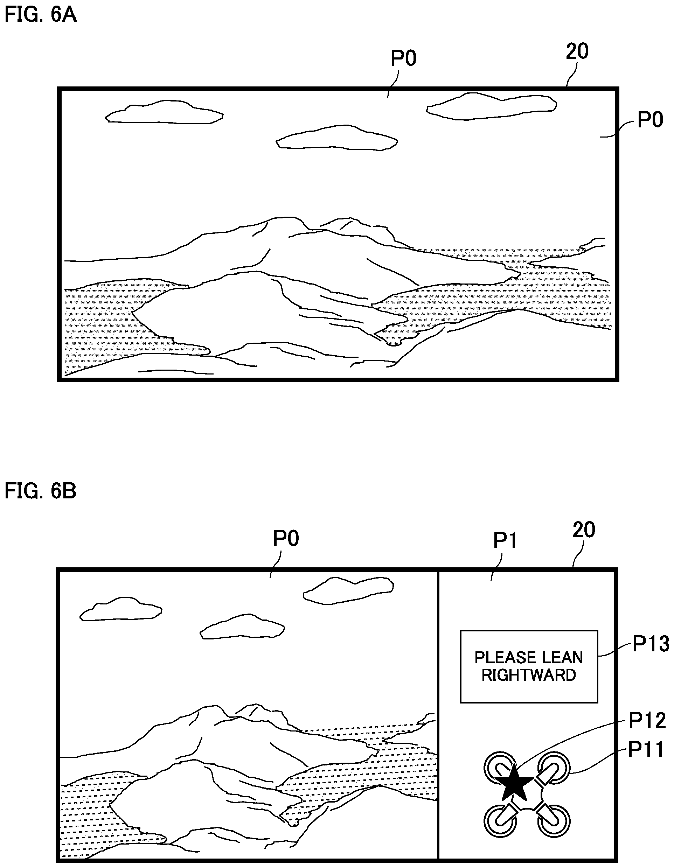

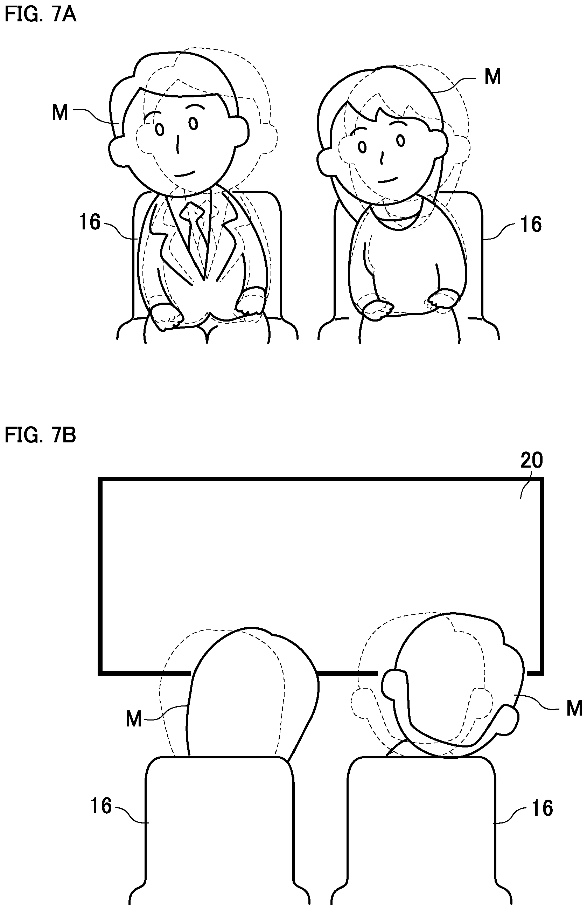

FIGS. 5A and 5B are diagrams illustrating a state in which passengers M are seated on seats 16. FIG. 5A is a front view, and FIG. 5B is a rear view. FIGS. 6A and 6B are diagrams illustrating examples of screens to be displayed on the display device 20. FIG. 6A illustrates a normal screen, and FIG. 6B illustrates a notification screen. Note that a "notification screen" is a screen for notification to passengers M and a "normal screen" is not for notification to passengers M. FIGS. 7A and 7B are diagrams illustrating an example of a movement that passengers M are urged to make by notification. FIG. 7A is a front view, and FIG. 7B is a rear view.

As illustrated in FIGS. 5A and 5B, passengers M can be seated on two seats in a row (FIG. 5A). The screen of the display device 20 is displayed at a relatively upper position in front of the passengers M (FIG. 5B). During stable cruising of the aircraft 1, the display device 20 displays the cruising (the image of the view ahead of the airframe), multimedia of entertainment for passengers M, or the like.

As illustrated in FIGS. 6A and 6B, for example, assume that a view image (scenery image) PO is displayed as a normal screen during cruising of the aircraft 1 (FIG. 6A). In a case where the airframe is inclined leftward by a predetermined degree or more by disturbance such as wind during cruising, the display unit 128 displays a notification screen (FIG. 6B). In the illustrated example, the view image P0 is reduced in size and a notification image P1 is displayed next to the view image P0. In the notification image P1, a mark P12 (black star) suggesting the direction of the inclination is superimposed on an image P11 representing the aircraft 1. Furthermore, a text P13 "PLEASE LEAN RIGHTWARD" is displayed.

The audio outputting unit 126 outputs audio to lead the passengers M to a posture in time with the display of the notification image P1. For example, such an announcement as follows is output: "As the airframe is inclined a little to the left, please lean slightly rightward. Thank you for your cooperation for safe flight." Thus, the notification unit performs a notifying process of leading the passengers M to a posture.

As illustrated in FIGS. 7A and 7B, the passengers M recognizes the notification and lean rightward. More precisely, the notification encourages the passengers M to cooperate, and the gravity center of the aircraft 1 is thus moved a little to the side as notified, which is expected to support the attitude control of the airframe performed by the attitude control unit 146. Note that the change in the gravity center caused by leading the passengers M is not so large as to hinder the attitude control performed by the attitude control unit 146. This change is only a supplementary measure of the attitude control performed by the attitude control unit 146.

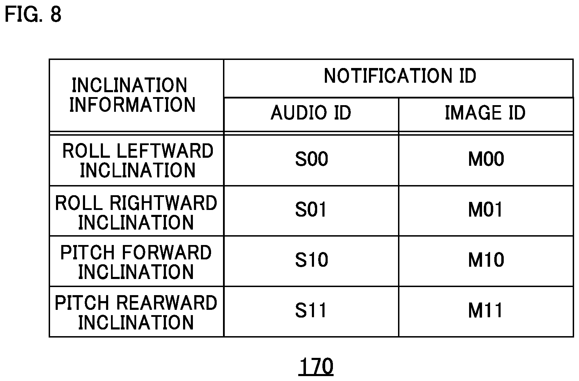

FIG. 8 is a table illustrating an outline structure of a notification information selection table.

The notification information selection table 170 is referred to when the inclination of the airframe caused by disturbance is detected while cruising control (level flight) is performed. In the notification information selection table 170, notification IDs are associated with inclination information (attitude information) of the airframe calculated by the attitude computing unit 140. Each "notification ID" includes an audio ID and an image ID. Each audio ID is associated with audio data stored in the audio data storage unit 132. Each image ID is associated with display data stored in the display data storage unit 134.

In the illustrated example, a case where the airframe is inclined to the left by a set angle or larger (roll leftward inclination) is associated with an audio ID "S00" and an image ID "M00". Thus, notification to lead the passengers M to lean rightward is made through audio of the audio data with the audio ID "S00" and a notification screen of the display data with the image ID "M00".

Note that the "set angle" can be set to an appropriate value, such as 5 degrees, on the basis of the specification and the performance of the aircraft 1. When the inclination is smaller than the set angle, the notifying process is not performed. This is because normal attitude control is sufficient for a small inclination, and it is not necessary to ask for the cooperation of the passengers M. In addition, this is also not to impose excessive burdens on the passengers M.

Similarly, a case where the airframe is inclined to the right by a set angle or larger (roll rightward inclination) is associated with an audio ID "S01" and an image ID "M01". Thus, notification to lead the passengers M to lean leftward is made. A case where the airframe is inclined forward by a set angle or larger (pitch forward inclination) is associated with an audio ID "S10" and an image ID "M10". Thus, notification to lead the passengers M to lean rearward is made. A case where the airframe is inclined rearward by a set angle or larger (pitch rearward inclination) is associated with an audio ID "S11" and an image ID "M11". Thus, notification to lead the passengers M to lean forward is made. The "set angle" may differ depending on the direction of inclination.

Although one notification ID is set for each piece of inclination information in the illustrated example, a plurality of notification ID candidates (notification candidates) may be set for each piece of inclination information, so that one of the candidates can be selected. Furthermore, a notification ID that does not include either of an audio ID and an image ID may be set.

Alternatively, the pieces of inclination information may be set in multiple levels such as equal to or larger than 5 degrees and smaller than 10 degrees, equal to or larger than 10 degrees and smaller than 15 degrees, and equal to or larger than 15 degrees. The pieces of inclination information in multiple levels are associated with different notification IDs from each other. This allows different notifications depending on the degree of inclination of the airframe, such as "please lean a little" or "please lean as much as possible". Flexible notifications depending on the urgency of cooperation request or the like can be achieved.

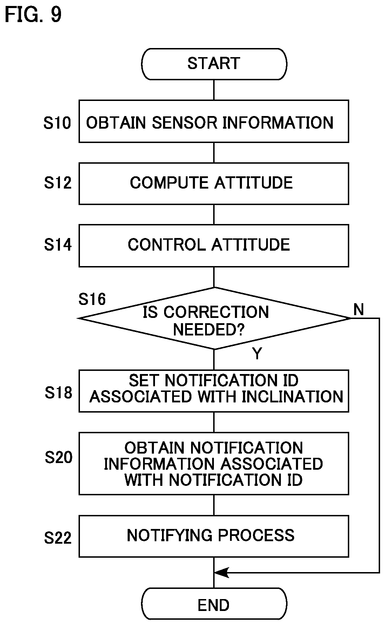

FIG. 9 is a flowchart illustrating attitude control processes performed by the attitude control device 100.

The processes in FIG. 9 are repeated on a predetermined control cycle.

The detection unit 116 obtains detected information detected by the sensors (S10). The attitude computing unit 140 computes the current attitude (inclination) of the airframe on the basis of the detected information (S12). During attitude control, the attitude control unit 146 performs feedback control on the basis of the current deviation between a target attitude and the current attitude so that the deviation becomes closer to zero (S14). Specifically, the attitude control unit 146 controls the motor driving unit 124 to control the rotating speeds of the individual rotors 4.

In this process, if correction performed by cooperation of the passengers M is necessary (Y in S16), that is, if the deviation is larger than a reference value (if the inclination of the airframe is equal to or larger than a set angle), the notification information selecting unit 152 refers to the notification information selection table 170 and sets a notification ID (audio ID, image ID) associated with the inclination information (S18). The notification information selecting unit 152 then obtains notification information (audio data, display data) associated with the notification ID from the notification information storage unit 130 (S20). The notification processing unit 144 performs the notifying process on the basis of the obtained notification information (S22). Specifically, the notification processing unit 144 instructs the notification outputting unit 120 to output audio and display an image. The display unit 128 displays a notification screen, and the audio outputting unit 126 outputs audio for notification.

If correction is not necessary (N in S16), that is, if the deviation is smaller than the reference value and it is not necessary to have the cooperation of the passengers M (if the inclination of the airframe is smaller than the set angle), the processes in S18 to S22 are skipped. In other words, it is determined that the attitude control in S14 is sufficient.

As described above, the aircraft 1 of the embodiment performs the notifying process of detecting the inclination of the airframe and leading the postures of the passengers M depending on the detected inclination. Because a movement mechanism for moving the payload in the aircraft need not be provided, support of the attitude control can be achieved by a simple structure. Furthermore, because motors and the like for driving such a movement mechanism are not needed, power consumption of the support of the attitude control can be reduced. Thus, according to the embodiment, power consumption can be lowered by having the cooperation of the passengers M in attitude control of the aircraft 1.

### [Modifications]

### [Modifications of notification method]

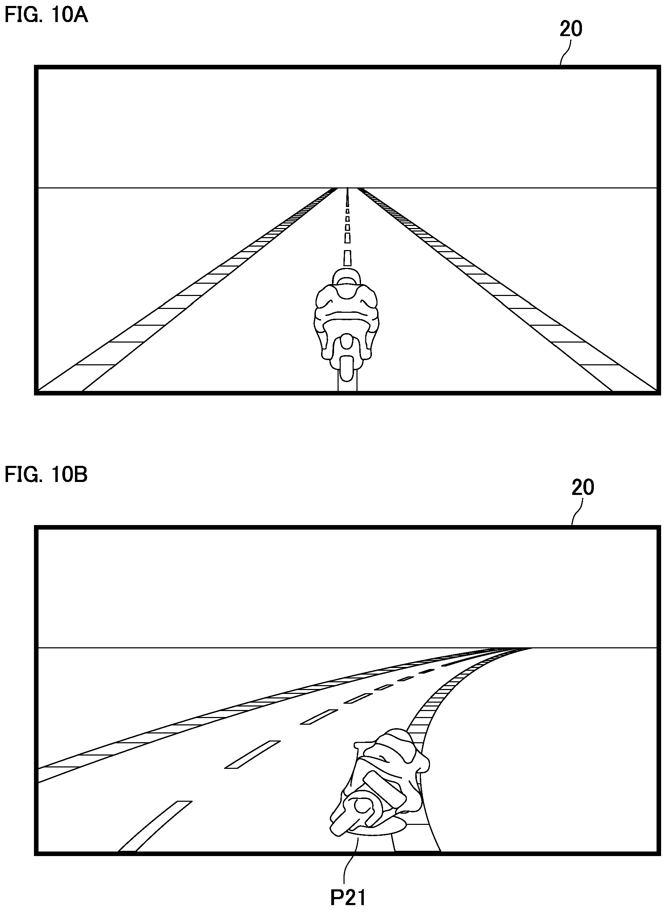

FIGS. 10A and 10B are diagrams illustrating a notification screen according to a first modification. FIG. 10A illustrates a normal screen, and FIG. 10B illustrates a notification screen.

In the first modification, a notifying process relating to leading to a posture is performed as amusement. FIGS. 10A and 10B illustrate a motorcycle game as an example. The passengers M are represented by a rider of a motorcycle.

During stable cruising of the aircraft 1, an image (video) of a motorcycle running on a straight course is displayed as a normal screen (FIG. 10A). In a case where the airframe is inclined leftward by more than a predetermined degree, for example, owing to disturbance during the cruising, the display unit 128 displays a notification screen (FIG. 10B). In the illustrated example, a notification image P21 in which the motorcycle approaches a right-hand curve and the rider leans to the right is displayed. Although not illustrated, an image in which another motorcycle is further coming close from an outer lane (a little rear-left side) may be displayed.

In this modification, the postures of the passengers M are not directly led by output of audio or display of a text in this process, but the notification image P21 suggests a request to the passengers M to "lean to the right". Specifically, the notification image P21 is designed as a video that encourages the passengers M to instantly change their postures (see FIGS. 7A and 7B). The notification unit performs a notifying process of suggesting a request to the passengers M (indirectly leading to a posture by means of presentation).

Although not illustrated, the course in this modification includes, in addition to right-hand curves, left-hand curves, downward slopes, upward slopes, and the like. A left-hand curve suggests a request to "lean leftward", and a downward slope suggests a request to "lean forward", an upward slope suggests a request to "lean rearward". In addition, a plurality of degrees (curvatures) are set for curves, and a plurality of degrees (gradients) are set for slopes, and the notification varies depending on the degree.

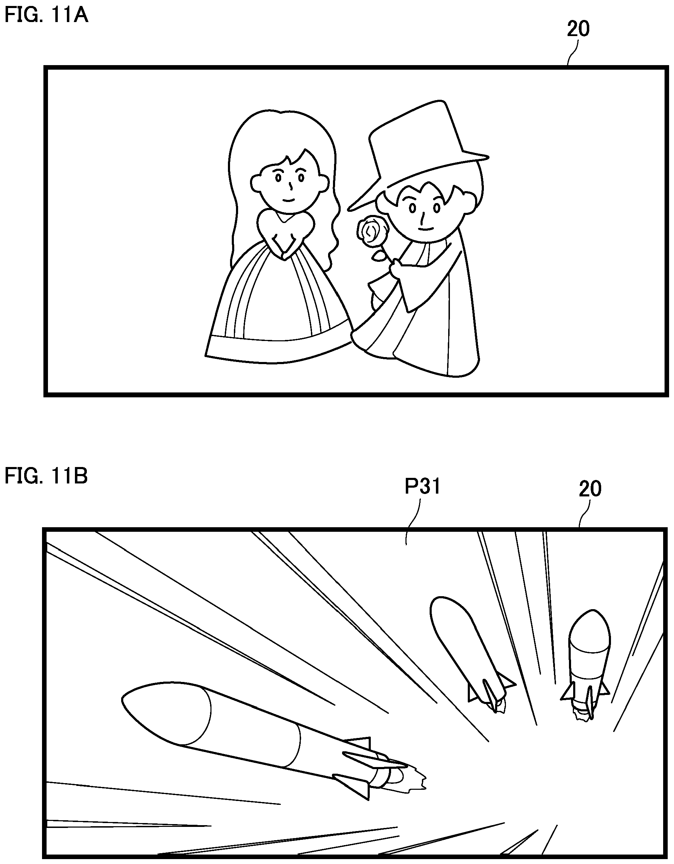

FIGS. 11A and 11B are diagrams illustrating a notification screen according to a second modification. FIG. 11A illustrates a normal screen, and FIG. 11B illustrates a notification screen.

In the second modification, a notifying process relating to leading to a posture is performed in the process of presentation display. During stable cruising of the aircraft 1, assume that a video such as a movie is played as a normal screen (FIG. 11A). In a case where the airframe is inclined leftward by more than a predetermined degree (roll leftward inclination), for example, owing to disturbance during the cruising, the display unit 128 displays a notification screen (FIG. 11B). In the illustrated example, a notification image P31 in which missiles are coming a little to the left of the front is displayed. This causes the passengers M to instantly lean rightward to avoid the missiles.

In this modification as well, the postures of passengers M are not directly led by output of audio or display of a text in this process, but the notification image P31 leads the passengers M to avoid the missiles. Specifically, the notification image P31 is designed as a video that encourages the passengers M to change their postures (see FIGS. 7A and 7B). The notification image P31 can urge the passengers M to react reflexively.

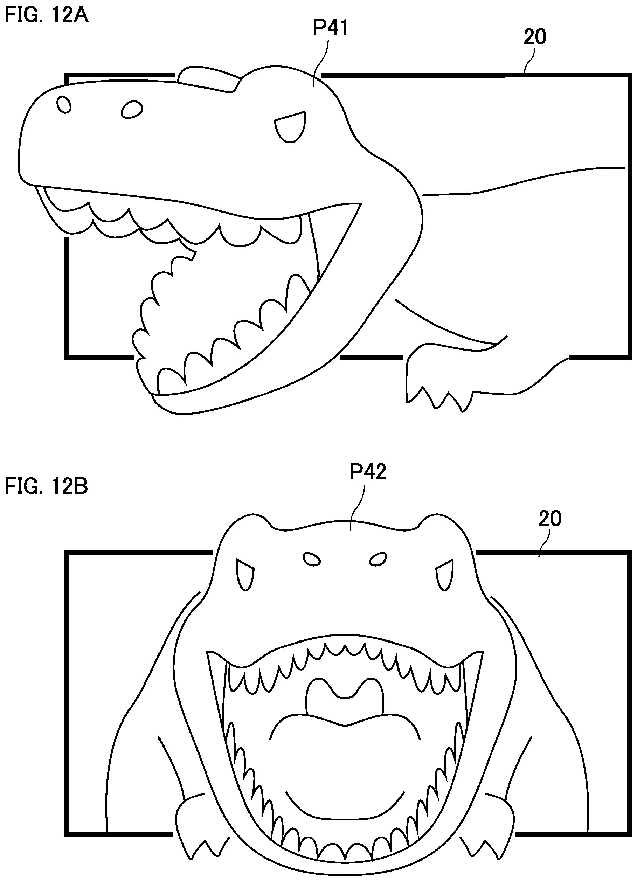

FIGS. 12A and 12B are diagrams illustrating a notification screen according to a third modification. FIG. 12A illustrates an example of a notification screen, and FIG. 12B illustrates another example of a notification screen.

In the third modification, a notifying process relating to leading a posture is performed with use of a 3D image.

During stable cruising of the aircraft 1, a view image (scenery image), a video, or the like as described above is displayed as a normal screen. In a case where the airframe is inclined by a predetermined degree or more by disturbance during the cruising, the display unit 128 displays a three-dimensional object (notification image) in imitation of a dinosaur on the notification screen. Specifically, in a case where the airframe is inclined leftward by a predetermined degree or more (roll leftward inclination), the display unit 18 displays a notification image P41 (FIG. 12A). In the illustrated example, a 3D image with an effect that a dinosaur appears like protruding toward the left front of the screen is displayed. This causes the passengers M to instantly lean rightward, for example, to avoid the dinosaur.

Alternatively, in a case where the airframe is inclined forward by more than a predetermined degree (pitch forward inclination), a notification image P42 is displayed (FIG. 12B). In the illustrated example, a 3D image with an effect that a dinosaur appears like protruding toward the center of the front of the screen is displayed. This causes the passengers M to instantly bend backward (lean backward) to avoid the dinosaur.

In this modification, the direction (vector) to which a 3D image appears to protrude is set to a direction deviating from or opposite the direction in which the attitude control is to be supported (that is, the direction of movement of weights to be requested to the passengers M) with respect to the front of the screen.

In this modification as well, the postures of the passengers M are not directly led by output of audio or display of a text in this process, but the notification images P41 and P42 urge the passengers M to react reflexively to avoid the dinosaur. This leads the postures of the passengers M to a specific direction.

Note that the notification images presented in the modifications described above are merely examples, and the image contents and the presentation method are not limited to those described above as long as similar effects are produced.

### [Modifications of display area]

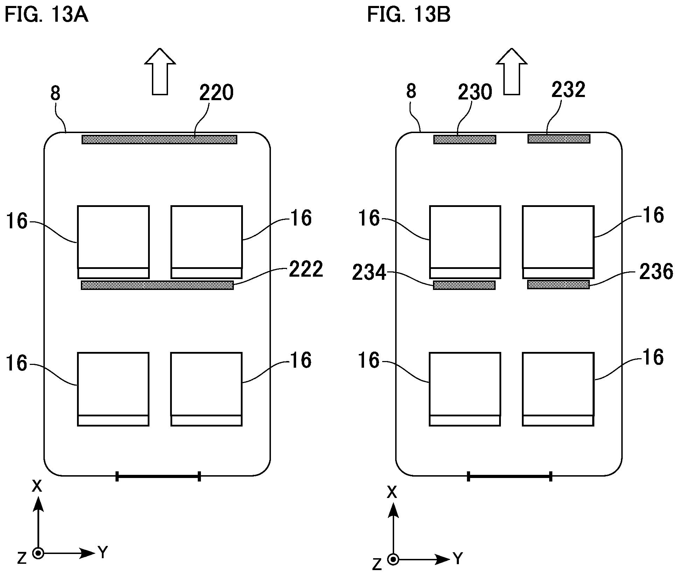

FIGS. 13A and 13B are diagrams illustrating arrangements of display devices according to modifications. FIG. 13A illustrates a fourth modification, and FIG. 13B illustrates a fifth modification. Arrows in FIGS. 13A and 13B indicate the forward direction of the cabin 8.

In the fourth modification, display devices 220 and 222 are provided for respective rows (FIG. 13A). In the fifth modification, display devices 230 to 236 are provided for individual seats (FIG. 13B). As a result of arranging display devices in predetermined units of seats in these manners, normal screens can be individually set. For example, there is a high flexibility in such a manner that one display device displays a game and another display device displays a movie. This makes it easier to provide viewing services depending on the interest of each passenger M.

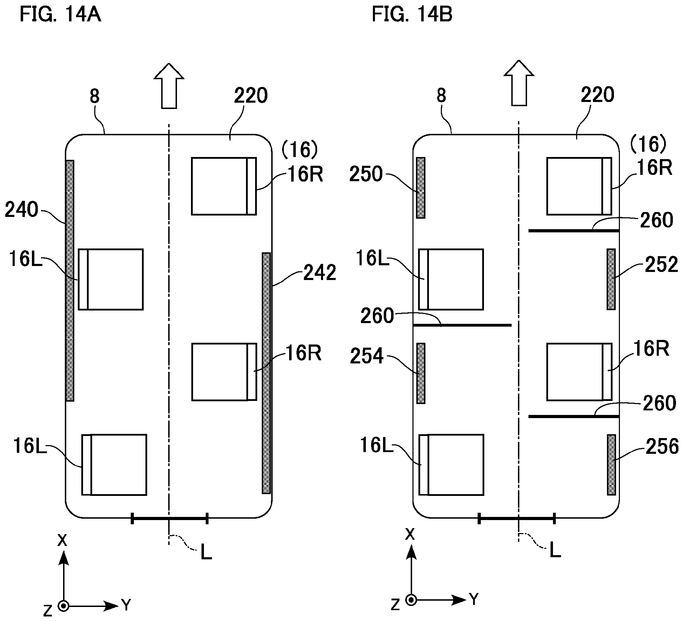

FIGS. 14A and 14B are diagrams illustrating arrangements of seats and display devices according to modifications. FIG. 14A illustrates a sixth modification, and FIG. 14B illustrates a seventh modification. Arrows in FIGS. 14A and 14B indicate the forward direction of the cabin 8.

In the sixth modification, seats 16 are arranged to face side walls of the cabin 8. Specifically, a plurality of seats 16 are each arranged at a position shifted with respect to a widthwise center (center line L) of the airframe and facing the width direction of the airframe. In addition, a display device 240 is installed on a left side wall, which is in front of seats 16R on a right column, and a display device 242 is installed on a right side wall, which is in front of seats 16L on a left column.

In the seventh modification, seats 16 are arranged to face side walls of the cabin 8 in a manner similar to the sixth modification, and display devices 250 to 256 are installed on side walls in front of the individual seats. Partitions 260 for privacy protection are each provided between a front seat and a back seat. In these modifications as well, as a result of arranging display devices in predetermined units of seats, normal screens can be individually set.

### [Modification of attitude control method]

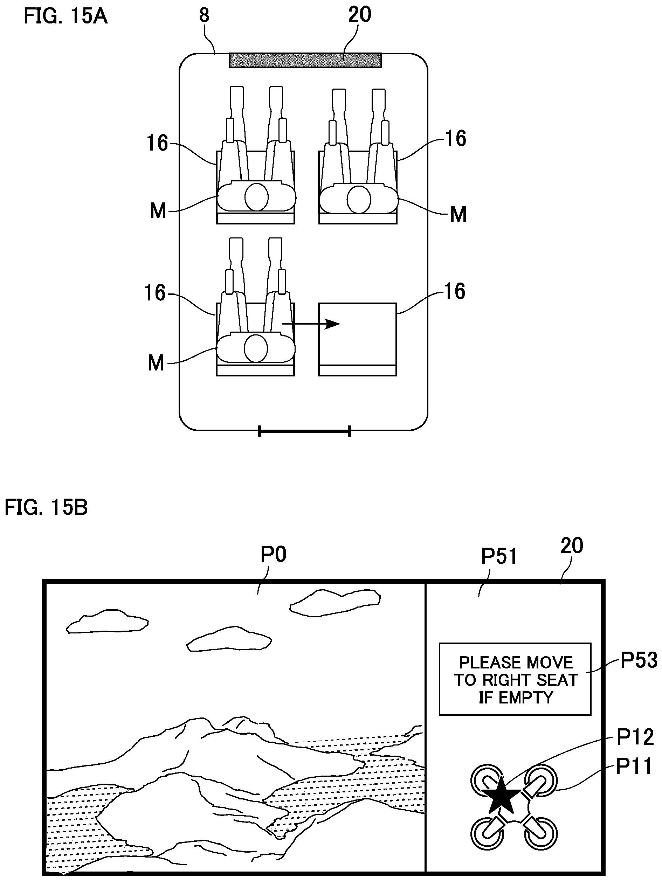

FIGS. 15A and 15B are diagrams illustrating an attitude control method according to a modification. FIG. 15A illustrates an inclination correcting method according to an eighth modification. FIG. 15B illustrates a notification screen.

In the eighth modification, the notification unit performs a notifying process of leading passengers to change seating positions. Specifically, in a case where there is an empty seat among a plurality of seats 16 provided in the cabin 8, the attitude control is supported by using the empty seat.

For example, assume that there is an empty seat on the right of the rear row (FIG. 15A) and that a view image is displayed as a normal screen during cruising of the aircraft 1. In a case where the airframe is inclined leftward by a predetermined degree or more by disturbance during the cruising, the display unit 128 displays a notification screen (FIG. 15B). In the illustrated example, a notification image P51 is displayed next to the view image P0. In the notification image P51, an image similar to that in the embodiment is displayed and a text P53 "PLEASE MOVE TO RIGHT SEAT IF EMPTY" is displayed.

The audio outputting unit 126 outputs audio leading the corresponding passenger M to a posture in time with the display of the notification image P51. For example, such an announcement as follows is output: "As the airframe is inclined a little to the left, please move to the right seat if empty. Thank you for your cooperation for safe flight."

The passenger M seated on the left back seat recognizes this notification and moves to the right seat, so that the gravity center of the aircraft 1 moves to the side as notified (see an arrow in FIG. 15A), which can support the airframe attitude control performed by the attitude control unit 146. As a result of the passenger M moving the seat in this manner, a greater effect of the support than that produced by simply leaning is expected.

Note that a notifying process that is a combination of the embodiment and the eighth modification may be performed. A notification screen that leads a passenger to move to an empty seat next to the passenger, if any, and leads a passenger with no empty seat next to his/her seat to lean may be displayed. Alternatively, a notification screen requesting either to move to another seat or to lean may be displayed and it may be left to the individual passengers how to behave.

The present invention is not limited to the embodiment and modifications described above, and any component thereof can be modified and embodied without departing from the scope of the invention. Components described in the embodiments and modifications can be combined as appropriate to form various embodiments. Some components may be omitted from the components presented in the embodiments and modifications.

In the embodiment described above, an example in which video data generated in advance as notification images are stored in the notification information storage unit 130 has been presented. In a modification, the image generating unit 154 may generate a video as a notification image on the basis of model data stored in the display data storage unit 134 by modifying the model data or the like.

In this case, in the attitude control processes illustrated in FIG. 9, the notification information selecting unit 152 obtains display data (model data) associated with the notification ID from the notification information storage unit 130 (S20). The image generating unit 154 generates a video on the basis of the model data. The notification processing unit 144 displays the video as notification information (S22). For example, when this modification is applied to the first modification described above (see FIGS. 10A and 10B), switching of driving of the motorcycle from a straight course to a curved course can be displayed continuously in a natural manner in the video.

Although not mentioned in the embodiment described above, in the attitude control processes illustrated in FIG. 9, if the notifying process in S22 is not so effective, that is, if the passengers M were not led as expected, an update process to enhance the next notification may be performed. Specifically, because the attitude control processes are repeated on a predetermined control cycle as described above, the number of times S22 is successively performed is counted. When the count has become a predetermined number or larger, the level of notification may be increased even if the inclination information is the same as that of the previous notification. For example, in a case where a notification provided when the count is smaller than the predetermined number suggests that the requested cooperation is voluntary, a notification indicating that the requested cooperation is semi-mandatory or substantially mandatory may be provided. The notification information selecting unit 152 changes the selected notification ID.

In the embodiment described above, as illustrated in FIGS. 6A and 6B, an example of a notifying process of displaying the text P13 on the screen and outputting audio to expressly provide a request to the passengers M has been presented. In a modification, the display of the text P13 and the audio output may be omitted, and suggestion of the current inclination of the airframe may be provided by displaying the image P11 representing the aircraft 1 and the mark P12. In addition, suggestion to lead the passengers M to lean on the basis of the display may additionally be provided.

Although not mentioned in the embodiment described above, the notification unit may perform a process of notifying the passengers on depending on cruising information that is obtained. For example, assume a case where a vehicle of the same type that is cruising ahead (preceding vehicle) at a certain distance on the same route is present and the preceding vehicle is affected by the wind. In this case, the information obtaining unit 122 may obtain the inclination information of the preceding vehicle through communication, and perform the notifying process described above for the passengers on board depending on the inclination information. Alternatively, the information obtaining unit 122 may obtain information on wind direction, wind speed and the like (cruising environment information) from the preceding vehicle, estimate a future inclination of the airframe on the basis of the cruising environment information, and select notification information. This configuration enables attitude control with higher responsiveness.

While the display area is provided on an independent display device 20 in the embodiment described above, the wall surface, the ceiling, or the like of the cabin 8 may be used as a display area and images may be projected onto the display area by projection equipment such as a projector.

In the embodiment described above, an example in which the notification information selection table 170 is provided and the process of selecting one of a plurality of pieces of notification information depending on the inclination of the aircraft 1 has been presented. In a modification, a notifying process may be performed without using such tables. For example, a real-time view image may be displayed on a display area in the cabin, and when the inclination of the airframe has become a predetermined degree or more, audio of a general announcement such as "thank you for your cooperation in adjusting the inclination" may be output. The notification unit may perform a notifying process for the passengers on the basis of the single piece of notification information.

In the embodiment described above, an example of a pilotless automatically operated aircraft (automatically controlled aircraft) is presented as the aircraft 1. In a modification, a pilot or pilots may be on board of the aircraft 1. A cockpit may be provided at a front part of the cabin 8 in the fuselage 2. Combination of flying operation by a pilot and automatic operation may be enabled.

While an example of a structure in which four rotors 4 are provided at front, rear, right and left positions of the airframe has been presented in the embodiment described above, the number and the arrangement of rotors are not limited thereto, and may be set as appropriate. In addition, in the embodiment described above, an example in which the traveling direction (cruising direction) of the aircraft is the X direction has been presented. In a modification, the traveling direction may be set to any direction, such as the Y direction, with respect to a horizontal plane including the airframe. Alternatively, the traveling direction may be switchable as appropriate without being specified to one direction with respect to the airframe. The airframe may have a feature without directions such as front, rear, right and left.

Although not mentioned in the embodiment described above, the rotors 4 may be tiltrotors having variable angles with respect to the airframe. In this case, turning mechanisms for adjusting the tilt angles of the rotors 4, and motors (second motors) for driving the turning mechanisms are provided.

While an example in which the aircraft 1 includes four rod-like leg parts 6 has been presented in the embodiment described above, the shape and the number of leg parts are not limited thereto but can be set as appropriate. Furthermore, wheels may be provided instead of the leg parts 6. In this case, a wheel housing mechanism capable of accommodating the wheels inside the fuselage may be provided.

While an example of a drone type eVTOL aircraft has been presented as the aircraft 1 in the embodiment described above, it is needless to say that this is merely an example and that the type and the structure of the aircraft are not limited thereto. Furthermore, while the number of seats in the cabin 8 is four in the embodiments and modifications described above, the number of seats is not limited thereto and can be set as appropriate. In terms of facilitating balancing of the weight of the aircraft in the attitude control, seats are preferably arranged so that the seat positions are symmetric with respect to the center line (widthwise center) of the cabin 8.

While an example in which notification is provided for the passengers M has been presented in the embodiment described above, notification may alternatively be provided for "those on board" including crew members and passengers. The crew members may be "crew members except the pilot".

In the embodiment described above, audio data and display data are presented as examples of the "notification information". In a modification, the notification information may be display data that are lighting or blinking light at a specific position in the cabin. For example, a plurality of indicators for showing the posture leading direction may be provided at the front of the cabin. The indicators may be normally off, and when the passengers are to be led to a posture, an indicator of the direction of the posture may be turned on or caused to blink. Alternatively, the notification information may be vibration of a specific structure installed in the cabin. For example, a plurality of notifying members indicating posture leading directions may be installed at the front of the cabin. The notifying members may be normally stationary, and when the passengers are to be led to a posture, a notifying member indicating the direction of the posture may be caused to vibrate.

Alternatively, the notification information may be an activation of a toy. For example, a toy that can protrude from the front of the cabin like the 3D image illustrated in FIGS. 12A and 12B may be used. The toy is preferably lightweight and soft. The direction (vector) to which the toy protrudes is set to a direction deviating from or opposite the direction in which the attitude control is to be supported (that is, the direction of movement of weights to be requested to the passengers M) with respect to the front of the screen.

In the embodiment described above, an example in which the attitude control device 100 is applied to the aircraft 1 has been presented. In a modification, the attitude control device may be applied to other devices such as an arcade game machine or a simulator. The attitude control device includes main equipment that accommodates users. The main equipment includes seats on which users are to be seated as passengers. The display control unit changes screens to be displayed on the display unit depending on the inclination of the main equipment.

In the embodiment described above, an example of a notifying process of leading passengers to a posture so as to support the attitude control of the aircraft has been presented. In a modification, a notifying process of requesting to change the positions of goods (belongings) such as baggage of the passengers. For example, a notification of requesting to move baggage by the passengers' feet to one direction may be provided.

In the embodiment described above, an example of a configuration in which the attitude control device 100 is mounted on the aircraft 1 has been presented. In a modification, at least some of the functions of the attitude control device may be included in a ground-based external device. The external device may be installed in a control tower. At least some of the functions of the attitude control device may be included in a flight controller (external device) that can be operated on the ground. The aircraft performs a notifying process through communication with the external device.

## Claims

1. An attitude control device comprising:
a detection unit that detects an inclination of an aircraft; and
a notification unit that performs a notifying process for passengers depending on the detected inclination.

2. The attitude control device according to claim 1, wherein the notification unit performs a notifying process of leading the passengers to a posture or to change seats.

3. The attitude control device according to claim 1 or 2, wherein the notification unit performs a notifying process of suggesting a request to the passengers.

4. The attitude control device according to any one of claims 1 to 3, wherein the notification unit displays a predetermined image in a display area being provided in a cabin of the aircraft and being viewable by the passengers, and changes the predetermined image depending on the detected inclination.

5. The attitude control device according to any one of claims 1 to 4, wherein the notification unit performs a notifying process of urging the passengers to react reflexively.

6. The attitude control device according to any one of claims 1 to 5, wherein the notification unit displays a predetermined three-dimensional object in a display area being provided in a cabin of the aircraft and being viewable by the passengers, and changes a position of the three-dimensional object depending on the detected inclination.

7. The attitude control device according to any one of claims 1 to 6, further comprising:
a notification information storage unit that stores a plurality of pieces of notification information; and
a notification information selecting unit that selects one of the plurality of pieces of notification information depending on the detected inclination, wherein
the notification unit performs the notifying process for the passengers on the basis of the selected piece of notification information.

8. The attitude control device according to claim 7, wherein the notification information includes at least either of image information and audio information.

9. The attitude control device according to claim 7 or 8, wherein the notification information includes information being preset to lead the passengers to a posture or to change seats depending on the inclination of the aircraft.

10. The attitude control device according to any one of claims 7 to 9, wherein the notification information selecting unit selects a piece of notification information associated with the detected inclination from a plurality of pieces of notification information each associated with an inclination degree of the aircraft.

11. An attitude control device comprising:
main equipment for accommodating passengers;
a display unit that displays a screen to be shown to the passengers;
a detection unit that detects an inclination of the main equipment; and
a display control unit that changes the screen on the display unit depending on the detected inclination.

12. An attitude control device comprising:
an information obtaining unit that obtains cruising information of an aircraft; and
a notification unit that performs a notifying process for passengers depending on the obtained cruising information.

13. An aircraft comprising:
a detection unit that detects an inclination of an airframe; and
a notification unit that performs a notifying process for passengers depending on the detected inclination.
